# EUROPÄISCHE PATENTSCHRIFT

(11) **EP 0 869 710 B1**
(45) Veröffentlichungstag und Bekanntmachung des Hinweises auf die Patenterteilung: **22.12.1999**
(21) Anmeldenummer: 96945839.7
(22) Anmeldetag: 25.10.1996
(51) Int. Cl.: A01K 5/01, A01K 15/02, A23K 1/18

(54) **VORRICHTUNG ZUR VERABREICHUNG UND/ODER AUFBEWAHRUNG VON TIERNAHRUNG**
DEVICE FOR ADMINISTERING AND/OR PRESERVING ANIMAL FOOD
DISPOSITIF D'ADMINISTRATION ET/OU DE CONSERVATION D'ALIMENTS POUR ANIMAUX

(30) Priorität: 12.12.1995 DE 29519685 U
(43) Veröffentlichungstag der Anmeldung: 14.10.1998
(73) Patentinhaber: EFFEM GmbH, D-27283 Verden (DE)
(72) Erfinder: LONG, Alan, D-27283 Verden (DE)
(74) Vertreter: Goddar, Heinz J., Dr.
(86) Internationale Anmeldenummer: DE9602055
(87) Internationale Veröffentlichungsnummer: WO9721341

(56) Entgegenhaltungen:
- EP-A- 0 558 774
- DE-U- 29 501 558
- FR-A- 2 131 288
- US-A- 4 857 333
- US-A- 5 339 771

## Beschreibung

Die Erfindung betrifft eine Vorrichtung zur Verabreichung und/oder Aufbewahrung von Tiernahrung.

In der Natur finden sich sehr viele Beispiele für das Zusammenleben verschiedener Formen von Organismen zum gegenseitigen Nutzen. Gerade die Entwicklung des Menschen bzw. menschlicher Gesellschaften ist gekennzeichnet, vielleicht sogar geprägt, durch derartige symbiontische Beziehungen. Bereits die frühen Jäger- und Sammlergesellschaften dürften von der mittelbaren oder unmittelbaren Nähe von Caniden profitiert haben. Diese Nähe führte letztenendes zur Domestikation, die besonders beim Übergang der Jäger- und Sammlergesellschaften zu Landwirtschaft betreibenden Gesellschaften eine stärkere Ausprägung erfuhr. Mit einer weitergehenden Differenzierung dieser wechselseitigen Beziehung zwischen (Haus-)Tier und Menschen kam es zu einer weitergehenden Arbeitsteilung, die dem Menschen auch eine Fürsorgepflicht gegenüber dem Tier auferlegte.

In den letzten Jahrzehnten hat sich vor allem in den westlichen Industrieländern das Verhältnis des Menschen zu seinen Haustieren nochmals grundlegend geändert. In den wenigsten Fällen sind Haustiere heute noch mit Aufgaben betraut, die sich aus ihrer speziellen Natur bzw. deren ursprünglichen Bedeutung für den Menschen ergeben. Dies gilt besonders für Hunde und Katzen. Statt dessen sind sie Teil der Familie geworden und mehr Spiel- und Weggefährten denn Jagdgehilfen, Bewacher oder Schädlingsbekämpfer.

Demzufolge haben sich auch zum einen die Anforderungen an die Tiernahrung als solches durch das Tier hinsichtlich Qualität und Quantität verändert, zum anderen aber auch die Anforderungen durch den Tierbesitzer. Im Mittelpunkt all dieser Überlegungen steht die Fürsorgepflicht des Menschen gegenüber dem in seiner Gesellschaft lebenden Tier und die Gewährleistung artgerechter Lebensbedingungen.

Bei den Bemühungen, eine artgerechte Ernährung sicherzustellen, steht bisher im wesentlichen die Qualität der Tiernahrung im Vordergrund. Weniger Beachtung fand dabei die Art und Weise, wie das Tierfutter verabreicht wird, speziell mit Blick auf die domestizierten Beutegreifer Hund und Katze.

Zur Fütterung von Hund und Katze wird typischerweise im weitesten Sinne ein Napf verwendet, in dem die jeweilige Tiernahrung eingefüllt wird. Die besagte Tiernahrung kann dabei von unterschiedlicher Konsistenz sein, wobei man sich bemüht, die Konsistenz der normalerweise von den Tieren aufgenommenen Nahrung nachzuempfinden.

Es kann jedoch dem sachkundigen Tierhalter nicht entgangen sein, daß eine Verabreichung von Tiernahrung in der Form, daß das Tier die angebotene Nahrung direkt, d.h. aus dem Napf, aufnehmen kann, dem komplexen Verhalten, das mit der Nahrungsbeschaffung und Nahrungsaufnahme unter natürlichen Bedingungen verbunden ist, in keinster Weise gerecht wird.

Ohne im folgenden auf die verschiedenen Modelle, die in der Literatur zur Beschreibung des Verhaltens von Tieren entwickelt wurden, eingehen zu wollen, erscheint das Prinzip der doppelten Quantifizierung als plausibel und geeignet, tierisches Verhaften zu beschreiben, vielleicht sogar zu verstehen, und daraus die entsprechenden Konsequenzen auch für die Verabreichung von Tiernahrung ziehen zu können.

Das Prinzip der doppelten Quantifizierung besagt im wesentlichen, daß die Ausführung von Verhaltensweisen sowohl von inneren Bedingungen, z.B. in Form einer Handlungsbereitschaft, als auch von äußeren Faktoren, d.h. Reizen im Sinne von Auslösern, abhängig ist. Wenn beide Faktoren erfüllt sind, kann das jeweilige Verhaltensmuster beobachtet werden. Dabei ist es möglich, daß z.B. bei Vorliegen einer starken inneren Bedingung, z.B. dergestalt, daß eine Handlungsweise über einen längeren Zeitraum nicht mehr ausgeführt wurde, vergleichsweise unwichtige äußere Faktoren, d.h. schwache Auslöser, ausreichen, um das jeweilige Verhaltensmuster zur Ausführung gelangen zu lassen.

Auf den Futternapf angewendet bedeutet dies, daß mit der unmittelbaren Präsentation von Nahrung im Napf eine ganze Reihe von Verhaltensweisen, die der natürlichen Nahrungsbeschaffung durch das Tier zugrundeliegen, nicht ausgeführt werden. Dies führt damit zu einer verstärkten Handlungsbereitschaft, die sich dann in anderen Verhaltensweisen, z.B. Übersprungshandlungen, Bahn brechen kann, was letztenendes als Ausdruck einer nicht artgerechten Tierhaltung gewertet werden kann.

Eine andere Möglichkeit des Abbaus der erhöhten Handlungsbereitschaft des Tieres besteht darin, daß diese auf andere Objekte bezogen wird. Bei Hunden kann dies z.B. dazu führen, daß Tischbeine oder dergleichen mit den Zähnen bearbeitet werden.

Um den oben beschriebenen Verhaltensweisen ein geeignetes Ventil anzubieten, wurden Versuche unternommen, das Futter in geeigneter Form anzubieten, z.B. als Hundekuchen in Knochenform (siehe z.B. EP-A-0 558 774). Mit der optischen Gestaltung des Hundekuchens in Form eines Knochens wird dabei erreicht, daß bestimmte optische Reize (Knochenform), die beim Nahrungserwerb durch das Tier normalerweise auftreten, auch unter den Bedingungen der Domestikation geboten werden und somit einen Teil der Bedürfnisse des Tieres zu befriedigen in der Lage sind. Weitere Reizqualitäten wie z.B. taktile Reize, werden durch die Konsistenz des Hundeknochens reflektiert. Aber auch hier besteht der Nachteil darin, daß die Bearbeitung der Nahrung durch das Tier nur in sehr geringem Umfang gegeben ist. Ein weiterer Nachteil derartiger Tiernahrung bzw. der Form ihrer Verabreichung, ist darin zu sehen, daß nicht jede qualitativ hochwertige Tiernahrung in dieser Form angeboten werden kann. Weiterhin ist zu berücksichtigen, daß das Kaubedürfnis, d.h. die innere Bedingung dazu, gerade bei Hund und Katze sehr hoch ist, was dazu führen würde, daß eine entsprechend große Menge derartiger Tiernahrung verfüttert werden müßte. Damit jedoch käme es zu einem Ungleichgewicht zwischen dem Kaubedürfnis des Tieres einerseits und der notwendigen Nahrungszufuhr andererseits, die entweder dazu führen würde, daß das Tier zuviel Nahrung erhalten würde, was ebenfalls unter dem Aspekt der tiergerechten Arthaltung nicht erwünscht ist, oder aber das Kaubedürfnis letztenendes unbefriedigt bleiben würde.

Der Befriedigung des Kaubedürfnisses von Haustieren, und speziell von Hunden, wird durch sogenannte Kauknochen Rechnung getragen. Nachdem ein deutlicher innerer Zusammenhang zwischen Kauen und Nahrungsaufnahme bzw. Zufuhr von Energie normalerweise besteht, sind derartige Kauknochen unter dem Aspekt einer artgerechten Tierhaltung, d.h. Befriedigung innerer Bedingungen und äußerer Faktoren, die wie oben ausgeführt, einem Ausleben der entsprechenden Verhaltensmuster zugrundeliegen, nicht gegeben. Obwohl das Kaubedürfnis befriedigt wird, bleiben weitergehende Reize, wie z.B. taktile Reize, Geschmacks- und Geruchsreize aus und die entsprechenden physiologischen Reaktionen (Speichelfluß, Produktion von Verdauungsenzymen und dergleichen mehr) laufen ins Leere. Die in der Natur vorkommende enge zeitliche Korrelation derartiger Reizkonfigurationen tritt damit nicht ein. Die entsprechende Situation kann deshalb nicht als artgerecht bezeichnet werden.

Der Erfindung liegt die Aufgabe zugrunde, eine Vorrichtung vorzusehen, die der Verabreichung und/oder Aufnahme von Tiernahrung dient, wobei es zu einer Befriedigung von einer Vielzahl im Zusammenhang mit dem Nahrungserwerb stehenden Verhaltensmustern kommt. Speziell soll in Übereinstimmung mit der natürlicherweise bei der Nahrungsaufnahme beobachteten zeitlichen Korrelation von optischen, taktilen, Geruchs- und Geschmacksreizen diese bei der Verabreichung von Tiernahrung weitestgehend nachgeahmt werden und damit insgesamt eine artgerechtere Tierhaltung ermöglicht werden.

Erfindungsgemäß wird die Aufgabe gelöst durch eine Vorrichtung zur Verabreichung und/oder Aufbewahrung von Tiernahrung, dadurch gekennzeichnet, daß die Vorrichtung aus mindestens zwei lösbar miteinander zu verbindenden Teilen besteht, wobei mindestens ein Teil eine Ausnehmung aufweist, so daß die Teile im zusammengefügten Zustand einen innen gelegenen Hohlraum definieren, der der Aufnahme und der Aufbewahrung von Tiernahrung dient, und sich die lösbar miteinander zu verbindenden Teile unter dem Einfluß von Beiß- und/oder Kaubewegungen und/oder Manipulationen mit Extremitäten und/oder anderen Hilfsmitteln an der Vorrichtung durch das zu fütternde Tier lösen und damit Zugang zu der im Inneren der Vorrichtung befindlichen Tiernahrung möglich wird.

In einer Ausführungsform sind die Teile über mindestens eine angeformte Steckverbindung miteinander verbunden.

In einer bevorzugten Alternative weist die Vorrichtung eine längliche Form und mindestens an einer Stelle der Vorrichtung eine Verjüngung auf, die es erlaubt, daß die auf einer Oberfläche liegende Vorrichtung vom Tier, dem die Nahrung verabreicht werden soll, mit dem Mund aufgenommen werden kann.

In einer besonders bevorzugten Alternative kann die Vorrichtung in Form eines Knochens gestaltet sein.

In einer Ausführungsform weist die Vorrichtung eine Oberflächenvertiefung auf, die als Ansatzpunkt zum Öffnen der Vorrichtung dient und dabei die im Inneren untergebrachte Tiernahrung zugänglich wird.

In einer Alternative entsteht ein Spalt an der Vorrichtung durch die Zusammenfügung der Teile, der als Ansatzpunkt zum Öffnen der Vorrichtung dient und dabei die im Inneren untergebrachte Tiernahrung zugänglich wird, wobei in einer besonders bevorzugten Ausführungsform der Spalt in Längsrichtung der Vorrichtung verläuft.

Ganz besonders vorteilhaft, gestaltet sich eine Ausführungsform, wenn der Spalt in seiner Länge eine unterschiedliche Breite aufweist.

Eine bevorzugte Ausführungsform ergibt sich dadurch, daß der durch das Zusammenfügen der Teile im Inneren der Vorrichtung gebildete Hohlraum größer ist als zur Aufnahme des Tierfutters notwendig und sich die eingebrachte Tiernahrung relativ zu sich selbst und zum Hohlrauminneren bewegen kann.

In einer besonders bevorzugten Alternative der erfindungsgemäßen Vorrichtung ist der Hohlraum, oder ein Teil davon, mit einem eßbaren Biopolymer oder Kunststoff versiegelt.

In einer bevorzugten Ausführungsform wird die Hohlraumversiegelung unter dem Einfluß von im Speichel des zu fütternden Tieres enthaltener enzymatischer Aktivität aufgelöst.

In einer Alternative ist mindestens ein Teil der Vorrichtung aus eßbarem Material hergestellt.

Eine besonders bevorzugte Alternative der vorliegenden Erfindung wird dadurch gebildet, daß alle Teile der Vorrichtung aus eßbarem Material hergestellt sind.

In einer Ausführungsform ist mindestens ein Teil der Vorrichtung mit Geruchs- und/oder Geschmacksstoffen ausgestattet.

In einer besonders bevorzugten Ausführungsform werden die Geschmacks- und/oder Geruchsstoffe erst unter dem Einfluß von im Speichel des zu fütternden Tieres enthaltener enzymatischer Aktivität freigesetzt.

In einer Alternative weist die Vorrichtung Einrichtungen auf, die für das zu fütternde Tier ausgeprägte taktile Reize darstellen, wobei in besonders bevorzugten Ausführungen die besagten Einrichtungen aus der Gruppe ausgewählt sind, die unter anderem Raumstrukturen, Faserelemente und rauhe Oberflächenelemente umfassen.

In einer Ausführungsform weist die erfindungsgemäße Vorrichtung Gestaltungsmittel auf, die für das zu fütternde Tier ausgeprägte optische Auslöser für mit der Nahrungsaufnahme im Zusammenhang stehende Verhaltensweisen darstellen.

Eine besonders bevorzugte Ausführungsform ergibt sich, wenn die Gestaltungsmittel aus der Gruppe ausgewählt sind, die unter anderem Raumelemente, Farbmuster, Farbintensitäten und Farben bzw. deren entsprechende Grauwerte umfassen.

In einer Alternative weist die Vorrichtung nach dem Zusammenbau der sie bildenden mindestens zwei Teile eine Beschichtung auf, die unter dem Einfluß von im Speichel des zu fütternden Tieres enthaltener enzymatischer Aktivität aufgelöst wird, und erst nach dem Auflösen der besagten Schicht die im Inneren des Hohlraumes befindliche Tiernahrung freigibt, ggf. unter dem Einfluß von Beiß- und/oder Kaubewegungen und/oder Manipulationen mit Extremitäten und/oder Hilfsmitteln an der Vorrichtung durch das zu fütternde Tier.

Eine bevorzugte Ausführungsform ergibt sich, wenn die Beschichtung auf dem Bereich der Fügestelle zwischen den die Vorrichtung bildenden Teile sich erstreckt und erst nach Auflösen der besagten Schicht die im Inneren des Hohlraums enthaltene Tiernahrung freigibt.

Eine ganz besonders bevorzugte Ausführungsform ergibt sich dadurch, daß sich die Beschichtung auf den Bereich des Spaltes zwischen den die Vorrichtung bildenden Teile erstreckt und erst nach Auflösen der besagten Schicht die im Inneren des Hohlraums der Vorrichtung enthaltene Tiernahrung unter dem Einfluß von Beiß- und/oder Kaubewegungen und/oder Manipulationen mit Extremitäten und/oder Hilfsmitteln an der Vorrichtung durch das zu fütternde Tier freigibt.

In einer bevorzugten Alternative sind in der Beschichtung Geruchs- und/oder Geschmacksstoffe enthalten.

In einer besonders bevorzugten Ausführungsform werden die Geschmacks- und/oder Geruchsstoffe erst unter dem Einfluß von im Speichel des zu fütternden Tieres enthaltener enzymatischer Aktivität freigesetzt.

Die Erfindung betrifft weiterhin die Verwendung der Vorrichtung zur Aufbewahrung und/oder Verabreichung von Tiernahrung für die Aufbewahrung und/oder Verabreichung von Tiernahrung.

Mit der erfindungsgemäßen Vorrichtung wird dem Tierhalter die Möglichkeit gegeben, Tiernahrung aufzubewahren und vor allem diese artgerecht dem Tier zu verabreichen. Dabei ist artgerecht so zu verstehen, daß das Tier mit möglichst vielen jener Reizkonfigurationen konfrontiert wird, mit denen es beim artgemäßen Nahrungserwerb konfrontiert werden würde und demzufolge auch all jene Verhaltensmuster, oder zumindest eine möglichst große Anzahl davon entwickeln muß. Die Vorrichtung der vorliegenden Erfindung überwindet damit alle oben beschriebenen Nachteile des Stands der Technik. Entsprechend dem Prinzip der doppelten Quantifizierung erfolgt dabei eine Herabsetzung der Handlungsbereitschaft für viele im Zuge der Nahrungsbeschaffung und -aufnahme notwendigen Verhaltensmuster. Indem die eigentliche Nahrung in einem im Inneren der Vorrichtung gelegenen Hohlraum enthalten ist, muß das Tier eine ganze Reihe von Manipulationen unternehmen, um die lösbar miteinander zu verbindenden bzw. verbundenen Teile unter dem Einfluß von Beiß- und/oder Kaubewegungen und/oder Manipulationen mit Extremitäten und/oder Hilfsmitteln an der Vorrichtung durch das zu fütternde Tier zu lösen und damit Zugang zu der im Inneren der Vorrichtung befindlichen Tiernahrung möglich wird. Statt offen dazuliegen, wie dies bei Verwendung eines Futternapfes der Fall ist, bedarf es gewisser, vertretbarer Anstrengungen durch das Tier, um in den Genuß der Nahrung zu gelangen. Die diese Verhaltensmuster auslösenden Reize sind Teil einer ansonsten unter den normalerweise herrschenden Haltungsbedingungen diesbezüglich relativ reizarmen Umwelt. Indem die erfindungsgemäße Vorrichtung aus mindestens zwei Teilen besteht, die miteinander lösbar verbunden sind, kann sich das Tier seine Nahrungsquelle selbst erschließen. Nicht nur, daß der eigentliche Zweck der Futterung, die Zufuhr von Nahrung, erreicht wird, es wird auch gleichzeitig eine Belohnung für die unternommenden Anstrengungen verabreicht und ein Abbau der relevanten Handlungsbereitschaft erzielt.

Aus dem Gesagten ergibt sich ein weiterer Vorteil dergestalt, daß die besagte erfindungsgemäße Vorrichtung nicht nur der Verabreichung und/oder Aufbewahrung von Tiernahrung dient, sondern darüber hinaus auch als Spielzeug bzw. Mittel für die Erziehung von Tieren gesehen werden kann, wobei die in der Vorrichtung enthaltene Tiernahrung der positiven Verstärkung von erwünschten Verhaltensweisen dient.

Indem die Teile der erfindungsgemäßen Vorrichtung über mindestens eine angeformte Steckverbindung miteinander verbunden sind, besteht eine einfache, aber sehr wirkungsvolle Möglichkeit, die Bedingungen, unter denen die Vorrichtung durch das zu fütternde Tier geöffnet wird, zu regulieren. Ein enger Paßsitz zwischen den geformten Steckverbindungen wird ein Eröffnen der Vorrichtung erschweren, so daß auch z.B. größere Hunde einen ihrer Gesamtkörperkraft angemessenen Krafteinsatz erbringen müssen, um an die in der Vorrichtung enthaltene Tiernahrung zu gelangen. Umgekehrt kann durch eine vergleichsweise lose Steckverbindung auch kleineren Hunden ein Öffnen der Vorrichtung ermöglicht werden. Das Öffnen kann dabei unter dem Einfluß von Beiß- und/oder Kaubewegungen und/oder Manipulationen an der Vorrichtung mit Extremitäten und/oder Hilfsmitteln durch das zu fütternde Tier erfolgen. Ein weiterer Vorteil einer derartig geformten Steckverbindung besteht darin, daß die die Vorrichtung bildenden Teile so fest miteinander verbunden sind, daß sie nicht durch ein einfaches Aufnehmen der erfindungsgemäßen Vorrichtung durch das zu fütternde Tier oder durch Betasten mit den Extremitäten sofort ihren Inhalt freigibt.

Indem die erfindungsgemäße Vorrichtung an mindestens einer Stelle eine Verjüngung aufweist, wird gewährleistet, daß das Tier die Vorrichtung mit dem Mund umfassen kann, um die Vorrichtung aufzunehmen wie dies im Spiel oder der Erziehung oder beim Ausleben natürlicher Verhaltensmuster (Vertragen der Beute) der Fall ist, möglich wird. Durch entsprechende Gestaltung ist es auch möglich, daß Hunde, die sich sowohl hinsichtlich der Größe als auch Form des Mundes unterscheiden, ein und denselben Knochen benutzen können.

Der Möglichkeit, daß besagte erfindungsgemäße Vorrichtung mit dem Mund von z.B. dem Hund aufgenommen wird, trägt auch die längliche Form der Vorrichtung Rechnung. Darüber hinaus kann das spielerische Moment, das auch mit der Verwendung der besagten Vorrichtung verbunden sein kann, neben den Aspekt der Präsentation von verhaltensrelevanten optischen Auslösern treten. Auf den vorliegenden Fall angewendet bedeutet dies, daß im Rahmen einer artgerechten Haltung die Gestaltung der Gesamtlebenssituation für das Tier, z.B. durch Präsentation entsprechender optischer Reize, möglichst nahe an jenen Zustand heranreichen sollte, den es in seiner natürlichen Umgebung vorfinden würde. Mit der länglichen Form wird ein optischer Reiz präsentiert, der den Bedingungen in der Natur sehr nahe kommt, woraus sich, dem Prinzip der doppelten Quantifizierung folgend, eine Herabsetzung der Handlungsbereitschaft für das Ausleben der entsprechenden Verhaltensmuster ergibt, wie dies auch bei/nach der Nahrungsaufnahme unter natürlichen Bedingungen der Fall wäre. Indem die besagte Vorrichtung in Form eines Knochens gestaltet ist, trägt man den entsprechenden Bedürfnissen des Tieres, speziell des Hundes, besonders Rechnung.

Indem die erfindungsgemäße Vorrichtung mit einer Oberflächenvertiefung, speziell einem Spalt, versehen wird, der als Ansatzpunkt zum Öffnen der Vorrichtung dient und damit die im Inneren untergebrachte Tiernahrung zugänglich wird, ergeben sich, ob diese Oberflächenvertiefung nun durch die Zusammenfügung der Teile gebildet wird oder nicht, weitere Vorteile bezüglich des oben beschriebenen, im Sinne einer artgerechten Tierernährung und damit Tierhaltung positiv wirkenden Senkung der Handlungsbereitschaft. Durch den Spalt erhalten die zu fütternden Tiere die Möglichkeit, unter Einsatz ihrer Zähne die Vorrichtung zu öffnen. In Verbindung mit der länglichen Form werden darüber hinaus weitere motorische Aktivitäten, wie z.B. der Einsatz der Extremitäten, gefördert. All dies steht in deutlicher Erweiterung des normalen Handlungsablaufes, wenn die Tiere z.B. unter Verwendung eines Napfes gefüttert werden. Unterstützt wird dies durch den Verlauf des Spaltes in Längsrichtung der Vorrichtung.

Besondere fertigungstechnische Vorteile ergeben sich dadurch, daß die Oberflächenvertiefung (Spalt) durch die Zusammenfügung der die Vorrichtung bildenden Teile entsteht.

Indem der Spalt in seiner Länge eine unterschiedliche Breite aufweist, bieten sich für Tiere mit unterschiedlich großem Gebiß verschiedene Ansatzpunkte, so daß ein und dieselbe Vorrichtungsgröße bei z.B. verschiedenen Hunderassen zum Einsatz gelangen kann. Darüber hinaus wird mit der unterschiedlichen Breite auch die Möglichkeit eröffnet, daß verschiedene Zähne (Schneidezähne, Eckzähne, Backenzähne) eingesetzt werden können, um die Vorrichtung zu öffnen und damit an die Nahrung zu gelangen.

Dadurch, daß der im Inneren der Vorrichtung gebildete Hohlraum größer ist als zur eigentlichen Aufnahme des Tierfutters notwendig, ergibt sich, vor allen Dingen dann, wenn die aufzunehmende Tiernahrung aus einer Anzahl von testen Teilen mit einer harten Oberfläche besteht, die Möglichkeit einer Relativbewegung der Tiernahrung zu sich selbst und zum Hohlrauminneren. Durch diese Relativbewegung kommt es zwangsläufig zu Geräuschentwicklung, was einen weiteren, positiv zu bewertenden Stimulus im Zusammenhang mit der Nahrungsaufnahme darstellt. Ein weiterer damit verbundener Vorteil ist, daß, da sich die Tiernahrung innerhalb des Hohlraumes bewegen kann, es zu einer Verschiebung des Schwerpunktes kommt. Diese Schwerpunktsverschiebung macht sich für das Tier vor allen Dingen dann bemerkbar, wenn es die entsprechende Vorrichtung bewegt oder verträgt. Dabei treten zusätzliche taktile Reize auf, die bei keiner der im Stand der Technik beschriebenen Vorrichtungen erreicht wird.

Mit der erfindungsgemäßen Vorrichtung besteht weiterhin die vorteilhafte Möglichkeit, neben der eigentlichen, im Hohlrauminneren aufbewahrten Tiernahrung in Form der Vorrichtung selbst dem Tier eine weitere Nahrungsquelle zu erschließen. Dies wird dadurch erreicht, daß wenigstens ein Teil, oder die Vorrichtung als Ganzes, aus einem eßbaren Biopolymer oder Kunststoff hergestellt ist.

Neben der Verabreichung fester Tiernahrung ermöglicht die erfindungsgemäße Vorrichtung auch die Verabreichung von flüssiger bzw. viskoser Tiernahrung, indem der Hohlraum oder ein Teil davon, mit einem eßbaren Biopolymer oder Kunststoff versiegelt ist. Damit wird gewährleistet, daß beim Hantieren mit der Vorrichtung, sei es nun durch den Tierhalter oder das Tier selbst, die entsprechende Tiernahrung nicht vorzeitig freigesetzt wird. Wird die Hohlraumversiegelung aus einem eßbaren Biopolymer gestaltet oder auch ein entsprechender Kunststoff verwendet, die unter dem Einfluß von im Speichel des zu fütternden Tieres enthaltene enzymatische Aktivität aufgelöst werden, kann sichergestellt werden, daß selbst nach Öffnen der Vorrichtung die Nahrung nicht sofort freigesetzt wird, sondern weitere "Bemühungen" des zu fütternden Tieres notwendig sind, wie z.B. Lecken, bevor die Nahrung tatsächlich als solche zugänglich wird.

Mit der Ausstattung mindestens eines Teils der Vorrichtung mit Geruchs- und/oder Geschmacksstoffen ist der Vorteil verbunden, daß die Vorrichtung und damit letztenendes der Fütterungsvorgang, für das Tier interessanter wird, da mit dieser Maßnahme Geschmacks- und Geruchssinn weiter gezielt angesprochen werden können, was eine weitere Annäherung an die Verhältnisse bei der Nahrungsaufnahme in freier Wildbahn bedeutet. Darüber hinaus ist eine derartige Gestaltung besonders dann von Vorteil, wenn es gilt, dem Tier Arzneien zu verabreichen, die ansonsten nur schwer oral zu verabreichen wären.

Schließlich ergeben sich weitere Vorteile dadurch, daß die Vorrichtung Einrichtungen aufweist, die für das zu fütternde Tier ausgeprägte taktile Reize darstellen. Derartige Einrichtungen können unter anderem Raumstrukturen, Faserelemente und rauhe Oberflächenelemente umfassen. Dies führt zu einer noch weitergehenden Nachahmung der mit der Nahrungsaufnahme verbundenen Reize, wobei bedingt durch die Anzahl der am Freßvorgang beteiligten Sinne der Erlebniswert für das Tier und damit auch dessen Gesamtzustand verbessert wird.

Weitere diesbezügliche Vorteile ergeben sich dadurch, daß die Vorrichtung Gestaltungsmittel aufweist, die für das zu fütternde Tier ausgeprägte optische Auslöser für mit der Nahrungsaufnahme im Zusammenhang stehende Verhaltensweisen darstellen, wobei derartige Gestaltungsmittel unter anderem Raumelemente, Farben, Farbmuster, Farbintensitäten und Farben bzw. ihre entsprechenden Grauwerte umfassen.

Indem die Vorrichtung eine Beschichtung aufweist, die unter dem Einfluß von im Speichel des zu fütternden Tieres enthaltener enzymatischer Aktivität aufgelöst wird, ergeben sich eine Reihe weiterer Vorteile, die letztenendes damit im Zusammenhang stehen, daß verschiedene Reizqualitäten beim Freßvorgang gegenüber dem normalen Fressen aus einem Futternapf besonders betont werden. Wenn sich eine Beschichtung lediglich auf den Bereich der Fügestelle zwischen den die Vorrichtung bildenden Teile erstreckt, besteht für das zu fütternde Tier die Möglichkeit, mittels Mund und/oder Extremitäten an der Vorrichtung zu arbeiten, ohne daß unmittelbar unter dem Einfluß dieser Maßnahme die in der Vorrichtung enthaltene Nahrung freigesetzt werden würde. Statt dessen kann durch die erfindungsgemäße Beschichtung gewährleistet werden, daß erst nach einer bestimmten Zeit, dann nämlich, wenn die Beschichtung unter dem Einfluß des im Speichel des zu fütternden Tieres enthaltenen enzymatischen Aktivitäten aufgelöst ist, die in der Vorrichtung enthaltene Nahrung freigegeben wird. Dies verhindert, daß die Tiere die Vorrichtung unter bloßem Einsatz von Zähnen öffnen können.

Obgleich erfahrungsgemäß die Fähigkeit des Öffnens der erfindungsgemäßen Vorrichtung mit den Zähnen innerhalb kürzester Zeit von den Tieren erworben wird, bestehen verglichen mit herkömmlichen Systemen immer noch erhebliche Vorteile hinsichtlich der Absenkung der Handlungsbereitschaft, auch wenn die erfindungsgemäße Vorrichtung nicht die besagte Beschichtung aufweist.

Eine weitergehende Möglichkeit ergibt sich dadurch, daß die Beschichtung selbst Geruchs- und/oder Geschmacksstoffe enthält, die geeignet sind, das Interesse des Tiers nicht nur zu wecken, sondern auch in bestimmte Richtungen zu lenken, z.B. durch Realisierung eines entsprechenden räumlichen oder zeitlichen Gradienten. Um die entsprechende Reizschwelle nicht zu früh zu erhöhen, kann vorteilhafterweise die Freisetzung der Geschmacks- und/oder Geruchsstoffe erst unter dem Einfluß von im Speichel des zu fütternden Tieres enthaltener enzymatischer Aktivität freigesetzt werden, wodurch ein komplexerer Handlungsablauf beim Fütterungsvorgang bedingt werden kann.

Insgesamt ist die erfindungsgemäße Vorrichtung in hervorragender Art und Weise geeignet, die verschiedenen Reizkombinationen bei der Fütterung des Tieres jenen weitestgehend nachzuempfinden, wie sie unter natürlichen Bedingungen auftreten. Dies führt, auch unter Zugrundelegung des derzeitigen Verständnisses tierischen Verhaltens, zu einer insgesamt artgerechteren Haltung von Tieren, speziell von Hund und Katze.

Darüber hinaus hat die Verwendung der besagten erfindungsgemäßen Vorrichtung zur Aufbewahrung und/oder Verabreichung von Tiernahrung positive Auswirkungen auf die Nutzung tierischer Sinne, die somit nicht Gefahr lauten zu degenerieren, wie dies ansonsten der Fall ist, wenn entsprechende Sinneseindrücke über einen längeren Zeitraum nicht aufgenommen werden können. Weiterhin führt die Verwendung der Vorrichtung bei dem Tier dazu, daß der gesamte neuromuskuläre Apparat trainiert wird. Dabei ist besonders wichtig festzuhalten, daß die Nutzung der speziell angesprochenen neuromuskulären Einheiten unter den Bedingungen der Tierhaltung, wie sie in den meisten Fällen realisiert ist, nicht gewährleistet ist. Insoweit dient die erfindungsgemäße Verwendung der erfindungsgemäßen Vorrichtung der körperlichen Gesunderhaltung des Tieres im weitesten Sinne.

Zur weiteren Veranschaulichung der Erfindung wird im folgenden eine Ausführungsform der erfindungsgemäßen Vorrichtung erläutert. Es zeigt:
- Fig. 1: eine Seitenansicht der erfindungsgemäßen Vorrichtung;
- Fig. 2: eine Draufsicht auf die erfindungsgemäße Vorrichtung; und
- Fig. 3: eine Draufsicht der geöffneten erfindungsgemäßen Vorrichtung.

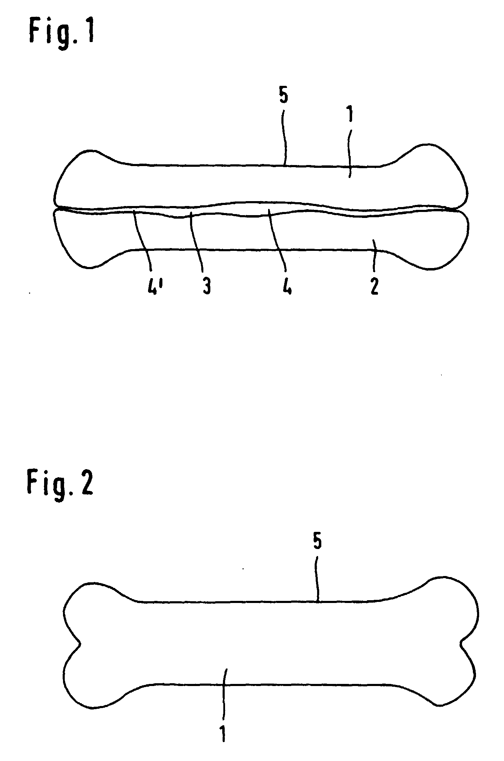

Fig. 1 zeigt eine Seitenansicht der erfindungsgemäßen Vorrichtung, wobei im vorliegenden Fall die Vorrichtung aus zwei Teilen, Oberteil 1 und Unterteil 2, besteht. Die Vorrichtung weist die Form eines Knochens auf, und erlaubt so ein Umfassen der Vorrichtung durch den Mund z.B. eines Hundes. Oberteil 1 und Unterteil 2 sind lösbar miteinander verbunden und bilden in Längsrichtung einen Spalt 3, der an verschiedenen Stellen verschiedene Spaltbreiten 4 und 4' aufweist.

Fig. 2 zeigt eine Draufsicht auf die erfindungsgemäße Vorrichtung, wobei im vorliegenden Falle Oberteil 1 und Unterteil 2 von praktisch identischer Form sind, so daß in der Draufsicht lediglich Oberteil 1 zu sehen ist. Verjüngung 5 ist angedeutet, die bedingt, daß die Vorrichtung vom zu fütternden Tier aufgenommen und ggf. getragen werden kann, bzw. im Spiel und zu Ausbildungszwecken ein Aufnehmen vom Boden und anderen Flächen möglich ist.

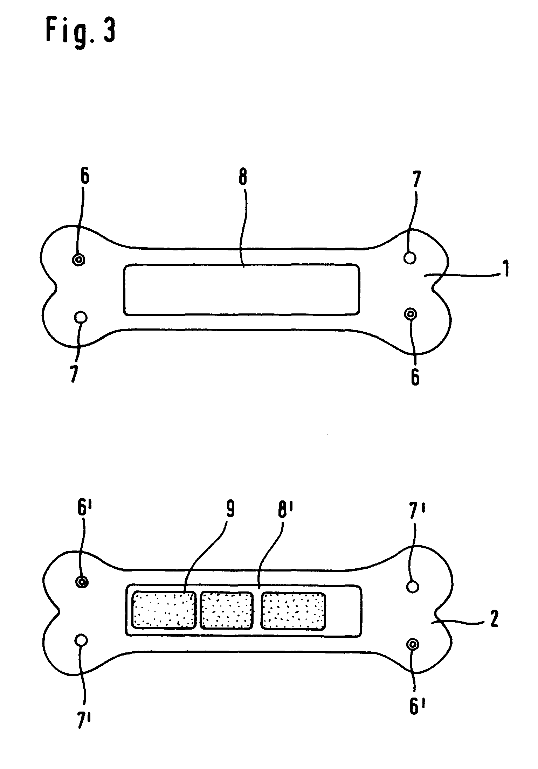

Fig. 3 zeigt eine Draufsicht der geöffneten erfindungsgemäßen Vorrichtung, wobei sowohl Oberteil 1 als auch Unterteil 2 Vorrichtungen aufweist, die eine lösbare Steckverbindung der beiden Teile erlaubt. Die Zapfen 6 von Oberteil 1 werden bei Zusammenfügen von Oberteil 1 und Unterteil 2 in die Bohrungen 7' von Unterteil 2 eingeführt und die Zapfen 6' von Unterteil 2 in die Bohrungen 7 von Oberteil 1. Der Paßsitz der Steckverbindung bestimmt wesentlich, unter welcher Krafteinwirkung Oberteil 1 und Unterteil 2 voneinander gelöst werden können, um die in Ausnehmung 8 und 8' untergebrachte Tiernahrung 9 freizugeben. Wenn Oberteil 1 und Unterteil 2 erfindungsgemäß zusammengefügt werden, bilden die beiden Ausnehmungen 8 und 8' von Oberteil 1 und Unterteil 2 den die Tiernahrung aufnehmenden inneren Hohlraum der erfindungsgemäßen Vorrichtung.

Die in der vorstehenden Beschreibung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 1: Oberteil
- 2: Unterteil
- 3: Spalt, umlaufend in Längsrichtung
- 4, 4': Spaltbreite
- 5: Verjüngung
- 6, 6': Zapfen
- 7, 7': Bohrung
- 8, 8': Ausnehmung
- 9: Tiernahrung

## Patentansprüche

1. Vorrichtung zur Verabreichung und/oder Aufbewahrung von Tiernahrung, dadurch gekennzeichnet, daß die Vorrichtung aus mindestens zwei lösbar miteinander zu verbindenden Teilen (1) und (2) besteht, wobei mindestens ein Teil eine Ausnehmung (8) aufweist, so daß die Teile im zusammengefügten Zustand einen innen gelegenen Hohlraum definieren, der der Aufnahme von Tiernahrung dient, und daß die lösbar miteinander zu verbindenden Teile sich unter dem Einfluß von Beiß- und/oder Kaubewegungen und/oder Manipulation mit Extremitäten und/oder Hilfsmitteln an der Vorrichtung durch das zu fütternde Tier lösen und damit Zugang zu der im Inneren der Vorrichtung befindlichen Tiernahrung möglich wird, und wobei durch die Zusammenfügung der Teile ein Spalt (3) an der Vorrichtung entsteht, der als Ansatzpunkt zum Öffnen der Vorrichtung dient und dabei die im Inneren untergebrachte Tiernahrung zugänglich wird, wobei der Spalt (3) in Längsrichtung der Vorrichtung verläuft.

2. Vorrichtung nach Anspruch 1, dadurch gekennzeichnet, daß die Teile über mindestens eine angeformte Steckverbindung miteinander verbunden sind.

3. Vorrichtung nach Anspruch 1 oder 2, dadurch gekennzeichnet, daß die Vorrichtung eine längliche Form aufweist und mindestens an einer Stelle der Vorrichtung eine Verjüngung aufweist, die es erlaubt, daß die auf einer Oberfläche liegende Vorrichtung vom Tier, dem die Nahrung verabreicht werden soll, mit dem Mund aufgenommen werden kann.

4. Vorrichtung nach Anspruch 3, dadurch gekennzeichnet, daß die Vorrichtung in Form eines Knochens gestaltet ist.

5. Vorrichtung nach einem der Ansprüche 1 bis 4, dadurch gekennzeichnet, daß die Vorrichtung eine Oberflächenvertiefung aufweist, die als Ansatzpunkt zum Öffnen der Vorrichtung dient und dabei die im Inneren untergebrachte Tiernahrung zugänglich wird.

6. Vorrichtung nach, dadurch gekennzeichnet, daß der Spalt (3) in seiner Länge eine unterschiedliche Breite aufweist.

7. Vorrichtung nach einem der Ansprüche 1 bis 6, dadurch gekennzeichnet, daß der durch das Zusammenfügen der Teile im Inneren der Vorrichtung gebildete Hohlraum größer ist als zur Aufnahme des Tierfutters notwendig und sich die eingebrachte Tiernahrung relativ zu sich selbst und zum Hohlrauminneren bewegen kann.

8. Vorrichtung nach Anspruch 7, dadurch gekennzeichnet, daß der Hohlraum mit einem eßbaren Biopolymer oder Kunststoff versiegelt ist.

9. Vorrichtung nach Anspruch 7, dadurch gekennzeichnet, daß ein Teil des Hohlraumes mit einem eßbaren Biopolymer oder Kunststoff versiegelt ist.

10. Vorrichtung nach Anspruch 8 oder 9, dadurch gekennzeichnet, daß die Hohlraumversiegelung unter dem Einfluß von im Speichel des zu fütternden Tieres enthaltener enzymatischer Aktivität aufgelöst wird.

11. Vorrichtung nach einem der Ansprüche 1 bis 10, dadurch gekennzeichnet, daß mindestens ein Teil der Vorrichtung aus eßbarem Material hergestellt ist.

12. Vorrichtung nach einem der Ansprüche 1 bis 11, dadurch gekennzeichnet, daß alle Teile der Vorrichtung aus eßbarem Material hergestellt sind.

13. Vorrichtung nach einem der Ansprüche 1 bis 12, dadurch gekennzeichnet, daß mindestens ein Teil der Vorrichtung mit Geruchs- und/oder Geschmacksstoffen ausgestattet ist.

14. Vorrichtung nach Anspruch 13, dadurch gekennzeichnet, daß die Geschmacks- und/oder Geruchsstoffe erst unter dem Einfluß von im Speichel des zu fütternden Tieres enthaltener enzymatischer Aktivität freigesetzt werden.

15. Vorrichtung nach einem der Ansprüche 1 bis 14, dadurch gekennzeichnet, daß die Vorrichtung Einrichtungen aufweist, die für das zu fütternde Tier ausgeprägte taktile Reize darstellen.

16. Vorrichtung nach Anspruch 15, dadurch gekennzeichnet, daß die Einrichtungen aus der Gruppe ausgewählt sind, die u.a. Raumstrukturen, Faserelemente und rauhe Oberflächenelemente umfassen.

17. Vorrichtung nach einem der Ansprüche 1 bis 16, dadurch gekennzeichnet, daß die Vorrichtung Gestaltungsmittel aufweist, die für das zu fütternde Tier ausgeprägte optische Auslöser für mit der Nahrungsaufnahme im Zusammenhang stehende Verhaltensweisen darstellen.

18. Vorrichtung nach Anspruch 17, dadurch gekennzeichnet, daß die Gestaltungsmittel aus der Gruppe ausgewählt sind, die u.a. Raumelemente, Farbmuster, Farbintensitäten, Farben bzw. deren entsprechende Grauwerte umfassen.

19. Vorrichtung nach Anspruch 1 bis 18, dadurch gekennzeichnet, daß die Vorrichtung nach dem Zusammenbau der sie bildenden mindestens zwei Teile eine Beschichtung aufweist, die unter dem Einfluß von im Speichel des zu fütternden Tieres enthaltener enzymatischer Aktivität aufgelöst wird, ggf. unter Einfluß von Beiß- und/oder Kaubewegungen und/oder Manipulationen mit Extremitäten und/oder Hilfsmitteln an der Vorrichtung durch das zu fütternde Tier.

20. Vorrichtung nach Anspruch 19, dadurch gekennzeichnet, daß sich die Beschichtung auf den Bereich der Fügestelle zwischen den die Vorrichtung bildenden Teile erstreckt und erst nach Auflösen der besagten Schicht die im Inneren des Hohlraums der Vorrichtung enthaltenen Tiernahrung freigibt.

21. Vorrichtung nach Anspruch 20, dadurch gekennzeichnet, daß sich die Beschichtung auf den Bereich der Fügestelle zwischen den die Vorrichtung bildenden Teile erstreckt und erst nach Auflösen der besagten Schicht die im Inneren des Hohlraums der Vorrichtung enthaltene Tiernahrung unter dem Einfluß von Beiß- und/oder Kaubewegungen und/oder Manipulationen mit Extremitäten und/oder Hilfsmitteln an der Vorrichtung durch das zu fütternde Tier freigibt.

22. Vorrichtung nach einem der Ansprüche 14 bis 21, dadurch gekennzeichnet, daß in der Beschichtung Geruchs- und/oder Geschmacksstotfe enthalten sind.

23. Vorrichtung nach Anspruch 22, dadurch gekennzeichnet, daß die Geschmacks- und/oder Geruchsetoffe erst unter dem Einfluß von im Speichel des zu fütternden Tieres enthaltener enzymatischer Aktivität freigesetzt werden.

24. Verwendung der Vorrichtung zur Aufbewahrung und/oder Verabreichung von Tiernahrung nach einem der vorangehenden Ansprüche für die Aufbewahrung und/oder Verabreichung von Tiernahrung.

## Claims

1. Device for administering and/or storing animal food, characterized in that the device consists of at least two parts (1) and (2) to be connected releasably to one another, at least one part having a recess (8), so that in the assembled state the parts define a cavity which is situated inside and serves to accommodate animal food, and in that the parts to be connected releasably to one another become detached under the effect of biting and/or chewing movements and/or manipulation with extremities and/or aids on the device by the animal to be fed and therefore access to the animal food situated in the interior of the device becomes possible, and the assembling of the parts causes a gap (3) to be produced on the device, which gap serves as the starting point for the opening of the device and in the course of this the animal food accommodated in the interior becomes accessible, the gap (3) running in the longitudinal direction of the device.

2. Device according to Claim 1, characterized in that the parts are connected to one another via at least one integral plug-in connection.

3. Device according to Claim 1 or 2, characterized in that the device has an elongated form and at least at one location on the device has a tapered portion which makes it possible for the animal, to whom the food is to be administered, to be able to pick up the device lying on a surface with its mouth.

4. Device according to Claim 3, characterized in that the device is designed in the form of a bone.

5. Device according to one of Claims 1 to 4, characterized in that the device has a surface depression which serves as the starting point for the opening of the device and in the course of which the animal food accommodated in the interior becomes accessible.

6. Device according to Claim 5, characterized in that the gap (3) differs in width over its length.

7. Device according to one of Claims 1 to 6, characterized in that the cavity, which is formed in the interior of the device by the assembling of the parts, is larger than is necessary to accommodate the animal feed, and the animal food placed in it can move in relation to itself and to the cavity interior.

8. Device according to Claim 7, characterized in that the cavity is sealed with an edible biopolymer or plastic.

9. Device according to Claim 7, characterized in that part of the cavity is sealed with an edible biopolymer or plastic.

10. Device according to Claim 8 or 9, characterized in that the cavity sealing is dissolved under the effect of enzymatic activity contained in the saliva of the animal to be fed.

11. Device according to one of Claims 1 to 10, characterized in that at least part of the device is produced from edible material.

12. Device according to one of Claims 1 to 11, characterized in that all parts of the device are produced from edible material.

13. Device according to one of Claims 1 to 12, characterized in that at least part of the device is provided with odour- and/or flavour-bearing substances.

14. Device according to Claim 13, characterized in that the flavour- and/or odour-bearing substances are only released under the effect of enzymatic activity contained in the saliva of the animal to be fed.

15. Device according to one of Claims 1 to 14, characterized in that the device has means which constitute distinct, tactile stimuli for the animal to be fed.

16. Device according to Claim 15, characterized in that the means are selected from the group which includes, inter alia, three-dimensional structures, fibre elements and rough surface elements.

17. Device according to one of Claims 1 to 10, characterized in that the device has configuration means which constitute distinct, visual triggers causing the animal to be fed to behave in a manner associated with the picking up of food.

18. Device according to Claim 17, characterized in that the configuration means are selected from the group which includes, inter alia, three-dimensional elements, colour patterns, strengths of colours, colours and their corresponding grey scale values.

19. Device according to Claims 1 to 18, characterized in that after the assembling of the at least two parts which form it, the device has a coating which is dissolved under the effect of enzymatic activity contained in the saliva of the animal to be fed, optionally under the effect of biting and/or chewing movements and/or manipulations with extremities and/or aids on the device by the animal to be fed.

20. Device according to Claim 19, characterized in that the coating extends over the region of the joint between the parts forming the device and only after the said layer is dissolved releases the animal food contained in the interior of the cavity of the device.

21. Device according to Claim 20, characterized in that the coating extends over the region of the joint between the parts forming the device and only after the said layer is dissolved releases the animal food contained in the interior of the cavity of the device, under the effect of biting and/or chewing movements and/or manipulations with extremities and/or aids on the device by the animal to be fed.

22. Device according to one of Claims 14 to 21, characterized in that odour- and/or flavour-bearing substances are contained in the coating.

23. Device according to Claim 22, characterized in that the flavour- and/or odour-bearing substances are only released under the effect of enzymatic activity contained in the saliva of the animal to be fed.

24. Use of the device for storing and/or administering animal food according to one of the preceding claims for storing and/or administering animal food.

## Revendications

1. Dispositif pour délivrer et/ou stocker de la nourriture pour animaux, caractérisé en ce que le dispositif est constitué par au moins deux parties (1) et (2), qui sont destinées à être reliées entre elles de façon amovible, au moins une partie comportant un évidement (8) de sorte qu'à l'état assemblé, les parties définissent une cavité intérieure, qui sert à loger de la nourriture pour animaux, et que les parties destinées à être reliées entre elles de façon amovible se détachent sous l'influence d'actions de saisie avec les dents et/ou d'actions de masticage et/ou de manipulations avec des extrémités et/ou moyens auxiliaires sur le dispositif, par l'animal à alimenter et que par conséquent l'accès à la nourriture pour animaux située à l'intérieur du dispositif devient possible, et dans lequel sous l'effet de la réunion des parties, une fente (3) est formée au niveau du dispositif, fente qui est utilisée comme contact pour l'ouverture du dispositif et la nourriture pour animaux logée à l'intérieur devient accessible, la fente (3) s'étendant dans la direction longitudinale du dispositif.

2. Dispositif selon la revendication 1, caractérisé en ce que les parties sont reliées entre elles par l'intermédiaire d'au moins une liaison à enfichage conformée.

3. Dispositif selon la revendication 1 ou 2, caractérisé en ce que le dispositif possède une forme allongée et comporte au moins en un emplacement un rétrécissement permettant à l'animal, auquel la nourriture doit être distribuée, de saisir dans sa gueule le dispositif disposé sur une surface.

4. Dispositif selon la revendication 3, caractérisé en ce que le dispositif est agencé sous la forme d'un os.

5. Dispositif selon l'une des revendications 1 à 4, caractérisé en ce que le dispositif possède un renfoncement de surface, qui sert de point d'attaque pour l'ouverture du dispositif, auquel cas la nourriture pour animaux logée à l'intérieur devient accessible.

6. Dispositif selon la revendication 5, caractérisé en ce que le fente (3) possède, sur sa longueur, une largeur variable.

7. Dispositif selon l'une des revendications 1 à 6, caractérisé en ce que la cavité formée à l'intérieur du dispositif lors de l'assemblage des parties est supérieure à ce qui est nécessaire pour loger la nourriture pour animaux et que la nourriture pour animaux, qui est insérée, peut se déplacer par rapport à elle-même et à l'intérieur de la cavité.

8. Dispositif selon la revendication 7, caractérisé en ce que la cavité est scellée à l'aide d'un biopolymère ou d'une matière plastique comestible.

9. Dispositif selon la revendication 7, caractérisé en ce qu'une partie de la cavité est scellée avec un biopolymère comestible.

10. Dispositif selon la revendication 8 ou 9, caractérisé en ce que le scellement de la cavité se défait sous l'influence de l'activité enzymatique contenue dans la salive de l'animal à alimenter.

11. Dispositif selon l'une des revendications 1 à 10, caractérisé en ce qu'au moins une partie du dispositif est réalisé en une matière comestible.

12. Dispositif selon l'une des revendications 1 à 11, caractérisé en ce que toutes les parties du dispositif sont réalisées en une matière comestible.

13. Dispositif selon l'une des revendications 1 à 12, caractérisé en ce qu'au moins une partie du dispositif est pourvue de substances olfactives et/ou gustatives.

14. Dispositif selon la revendication 13, caractérisé en ce que les substances gustatives et/ou olfactives sont libérées uniquement sous l'influence d'une activité enzymatique contenue dans la salive de l'animal à nourrir.

15. Dispositif selon l'une des revendications 1 à 14, caractérisé en ce que le dispositif comprend des systèmes qui représentent des excitations tactiles prononcées pour l'animal à nourrir.

16. Dispositif selon la revendication 15, caractérisé en ce que les dispositifs sont choisis dans le groupe qui comprend notamment des structures tridimensionnelles, des éléments de fibres et des éléments de surface rugueux.

17. Dispositif selon l'une des revendications 1 à 16, caractérisé en ce que le dispositif comprend des moyens de configuration, qui représentent pour l'animal à nourrir, des stimuli optiques prononcés pour un comportement en rapport avec l'absorption de nourriture.

18. Dispositif selon la revendication 17, caractérisé en ce que les moyens de configuration sont choisis dans le groupe qui comprend notamment des éléments tridimensionnels, des modèles colorés, des intensités de couleurs, des couleurs ou leurs valeurs de gris correspondantes.

19. Dispositif selon les revendications 1 à 18, caractérisé en ce qu'après l'assemblage des au moins deux parties constituant le dispositif, ce dernier comprend un revêtement, qui se dissout sous l'influence de l'activité enzymatique contenue dans la salive de l'animal à nourrir, éventuellement sous l'influence de mouvements de saisie avec les dents et/ou de mouvements de masticage et/ou de manipulations, avec des extrémités et/ou des moyens auxiliaires au niveau du dispositif, par l'animal à nourrir.

20. Dispositif selon la revendication 19, caractérisé en ce que le revêtement s'étend au niveau de la zone de jonction entre les parties formant le dispositif et libère la nourriture pour animaux contenue à l'intérieur de la cavité du dispositif uniquement après dissolution de ladite couche.

21. Dispositif selon la revendication 20, caractérisé en ce que le revêtement s'étend au niveau de la zone de jonction entre les parties formant le dispositif et libère la nourriture pour animaux contenue à l'intérieur de la cavité du dispositif uniquement après dissolution de ladite couche, sous l'effet de mouvements lors de l'action de saisie avec les dents et/ou de mouvements de masticage et/ou de manipulations avec des extrémités et/ou des moyens auxiliaires au niveau du dispositif, par l'animal à nourrir.

22. Dispositif selon les revendications 19 à 21, caractérisé en ce que des substances olfactives et/ou gustatives sont contenues dans le revêtement.

23. Dispositif selon la revendication 22, caractérisé en ce que les substances gustatives et/ou olfactives sont libérées uniquement sous l'influence d'une activité enzymatique contente dans la salive de l'animal a nourrir.

24. Utilisation du dispositif pour stocker et/ou administrer une nourriture à des animaux selon l'une des revendications précédentes, pour le stockage et/ou la délivrance d'une nourriture pour animaux.
